# EUROPEAN PATENT APPLICATION

(11) **EP 1 533 180 A2**
(43) Date of publication of application: **25.05.2005**
(21) Application number: 04257162.0
(22) Date of filing: 19.11.2004
(51) Int. Cl.: B60P 3/12

(54) **Trailer vehicle**

(30) Priority: 22.11.2003 GB 0327245
(71) Applicant: Thompson, Robert William, Yeovil, Sommerset BA21 4JS (GB)
(72) Inventor: Thompson, Robert William, Yeovil, Sommerset BA21 4JS (GB)
(74) Representative: Brown, Michael Stanley

(57) **Abstract**

A trailer includes a wheeled chassis (100) and a tilting bed (104) mounted on the chassis (100) for pivotal movement between a rearwardly inclined loading position and a forwardly pivoted, horizontal loaded position. A tailgate (107) is hingedly connected to the tilting bed (104) and is movable between a loading position, in which it forms an extension of the bed (104), and a substantially vertical position.

## Description

### Field of the Invention

This invention relates to trailer vehicles.

Disabled persons have particular problems because, even though they may possess powered personal mobility vehicles, such vehicles have relatively short ranges. For a disabled person to travel any significant distance, his or her personal mobility vehicle needs to be loaded onto another vehicle and then transported to a position within its working range.

Even though vehicle conversions that can accept a personal mobility vehicle are known, these are expensive and also require the presence of an able-bodied person to assist with the loading and unloading of the personal mobility vehicle. Both these factors restrict the activities of disabled persons.

It is accordingly an object of the present invention to provide a trailer vehicle that is particularly designed to facilitate the loading and unloading of, for example, personal mobility vehicles.

In US Patent Application Publication No. 2003/0156931 there is described a trailer of the kind that includes a wheeled chassis and a tilting bed mounted on the chassis for pivotal movement between a rearwardly inclined loading position and a forwardly pivoted, horizontal loaded position. Such a trailer is hereinafter referred to as "a trailer of the kind specified".

The trailer in US Patent Application Publication No. 2003/0156931 is designed for use in the transport of mowers and, during loading of a mower on the tilted bed, movement of the mower is guided by engagement of the mower wheel shafts in opposed guide rails or tracks. The trailer is thus only suitable for use in the transportation of a particular size of mower and is not of general application.

It is an object of the present invention to provide an improved form of trailer of the kind specified.

A further object of the present invention is the provision of a trailer of the kind specified that can be used for the transportation of personal mobility vehicles.

### Summary of the Invention

According to the present invention there is provided a trailer of the kind specified characterised in that it includes a tailgate hingedly connected to the tilting bed and movable between a loading position, in which it forms an extension of the bed, and a substantially vertical position.

A cabin for receiving, for example, a personal mobility vehicle is preferably mounted on the wheeled frame and the cabin preferably has a rear door that can be locked in its closed position. The arrangement is preferably such that, when the rear door is locked, it serves to hold the tailgate in its substantially vertical position.

### Brief Description of the Drawings

Figure 1 is a side view of a first form of trailer with the tilting bed thereof in its rearwardly inclined loading position,
Figure 2 is a rear view of the trailer of Figure 1 but with the rear door thereof in its locked position,
Figure 3 is a plan view of a second form of trailer, again with the tilting bed thereof in its rearwardly inclined loading position, and
Figure 4 is a side view of the trailer of Figure 3.

### Description of the Preferred Embodiments

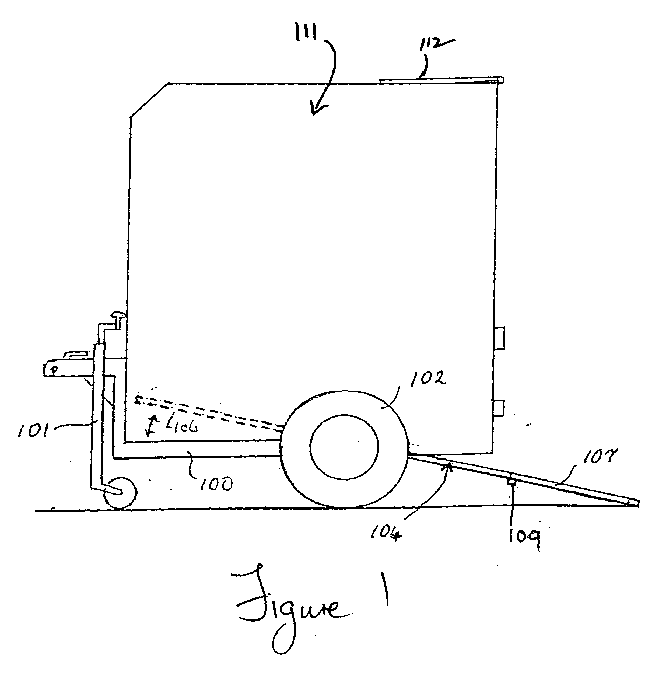

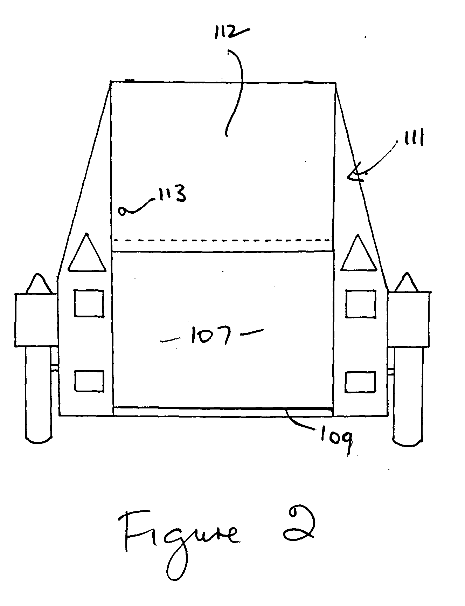

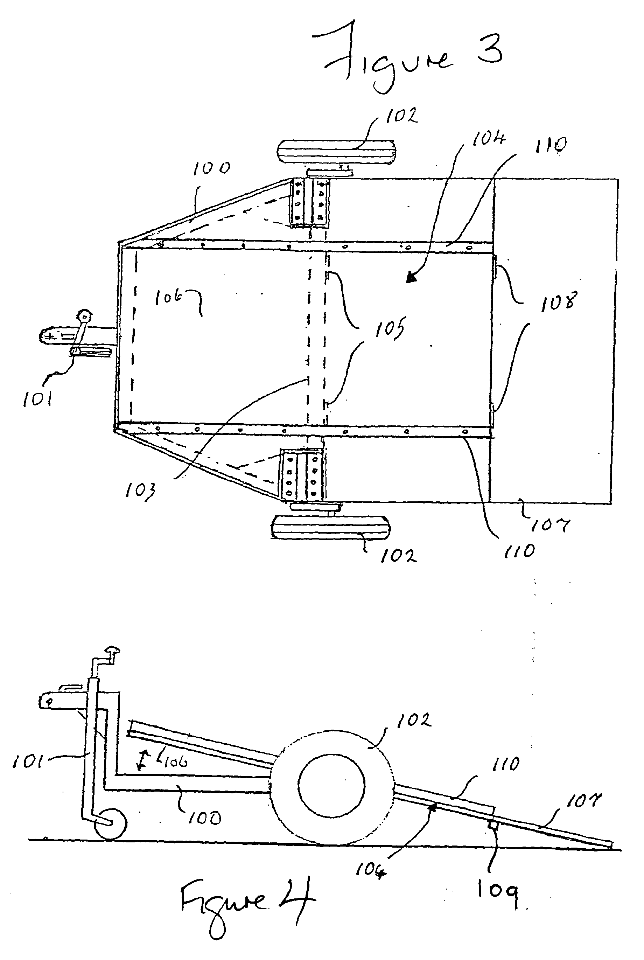

The trailer shown in Figures 1 and 2 represents the preferred embodiment of the invention and comprises, in essence, a trailer as shown in Figures 3 and 4 with the addition of a cabin to provide protection for the load, such as a personal mobility vehicle, that is to be carried. For convenience, the trailer shown in Figures 3 and 4 will be described first.

The trailer shown in Figures 3 and 4 includes a chassis 100 at the forward end of which there is a combined towing hitch and support jack assembly 101 such as are used on caravans and boat trailers. The particular assembly 101 shown in the drawings is of fixed length but may be replaced by an assembly that includes a longitudinally telescopic hitch to facilitate manoeuvring of the trailer in restricted locations.

The chassis 100 of the trailer includes two wheel and trailing arm suspension units 102 and a cross member 103. A load-carrying bed 104 is pivotally mounted on the cross member 103 by means of sleeve bearings or collars 105 and the width of the forward part 106 of the bed 104 is such that it can move upwardly and downwardly between the wheel and suspension units 102.

A tailgate 107 is connected to the rearward end of the bed 104 by a pair of hinges 108. The centre of gravity of the combination of the bed 104 and the tailgate 107 lies to the rear of the common axis of the collars 105 so that, when a latch (not shown) is released, the bed 104 and the tailgate 107 are free to move gravitationally into the positions shown in Figures 3 and 4 in which the edge of the tailgate 107 is in contact with the ground. A transverse box-section bar 109 is attached to the tailgate 107 adjacent the hinges 108 and is so shaped and positioned that the tailgate 107 cannot pivot relative to the bed 104 beyond a position in which it is in line with the bed 104. When the tailgate 107 is in its upright position, the bar 109 acts as a bumper or protector.

When the latch (not shown) is in its engaged condition, the bed 104 is kept in its horizontal position and the tailgate 107 is kept in its vertical position. Separate latch mechanisms may be provided for the bed 104 and for the tailgate 107 if so required.

Two longitudinally extending parallel angle-section members 110 are provided on the upper surface of the bed 104. They serve to stiffen the bed 104 and also act as guides to facilitate loading of a vehicle onto the trailer. Vehicle-restraining straps (not shown) may also be provided on the upper surface of the bed 104. The trailer will also be provided with brake lights (not shown) and any other lighting that is required to satisfy the current legal requirements.

In use, to load a self-powered vehicle, such as a personal mobility vehicle or a powered mower, onto the trailer, the latch is released and the tailgate 107 is lowered. The bed 104 is allowed to rotate until it is in alignment with the tailgate 107 and a continuous ramp surface is provided. The vehicle is then driven up the ramp formed by the tailgate 107 and the bed 104 using its own power source and controls by a person standing beside the trailer.

As the vehicle passes forwardly of the axis of rotation of the bed 104 of the trailer, the centre of gravity of the combination of the bed 104, the tailgate 107 and the vehicle moves beyond the axis of rotation of the bed 104, causing the bed 104 to return to the horizontal position. Once the bed 104 is in its horizontal position, the tailgate 107 is lifted into its vertical position and the latch is engaged to maintain the bed 104 in its horizontal position and the tailgate 107 in its vertical position. Any restraints that are provided are then fixed in position. To unload the vehicle from the trailer, the above sequence of operations is reversed and it is to be noted that loading and unloading of the vehicle can be carried out single-handed, even by a disabled person.

The trailer shown in Figures 1 and 2 includes substantially all the components of the trailer shown in Figures 3 and 4 but with the addition of a cabin 111 having a rear door 112 that can be locked in its closed position by means of a locking mechanism 113.

In order to load a vehicle into the cabin 111, the tailgate 107 is lowered into engagement with the ground and the bed 104 is allowed to pivot about its axis of rotation into the position shown in Figure 1. The personal mobility vehicle (or other small vehicle or powered device) is then driven up the ramp formed by the tailgate 107 and the bed 104 until a condition is reached in which the centre of gravity of the combination comprising the vehicle, the bed 104 and the tailgate 107 is disposed forwardly of the axis of rotation of the bed 104. The bed 104 then tilts until it is horizontal.

Once the bed 104 is in its horizontal position, in which it will automatically remain, the tailgate 107 is lifted into the position shown in Figure 2 and latches (not shown) at each side of the top of the tailgate 107 are engaged. The rear door 112 is then lowered so that the lower edge thereof overlaps the top of the tailgate 107. The rear door 112 is then locked in its closed position by means of the locking mechanism 113. Restraint means (not shown) may be provided for holding the vehicle or other device against movement relative to the trailer once it has been loaded into the trailer.

As shown, the rear door 112 is connected to the cabin 111 for hinged movement about its upper edge. The rear door may, however, be a side-hinged rear door.

## Claims

1. A trailer that includes a wheeled chassis (100) and a tilting bed (104) mounted on the frame for pivotal movement between a rearwardly inclined loading position and a forwardly pivoted, horizontal loaded position, **characterised in that** it includes a tailgate (107) hingedly connected to the tilting bed (104) and movable between a loading position, in which it forms an extension of the bed (104), and a substantially vertical position.

2. A trailer as claimed in Claim 1, **characterised in that** a cabin (111) is mounted on the wheeled chassis (100).

3. A trailer as claimed in Claim 2, **characterised in that** the cabin (111) has a rear door (112) that can be locked in its closed position.

4. A trailer as claimed in Claim 3, **characterised in that** the arrangement is such that, when the rear door (112) is locked, it serves to hold the tailgate (107) in its substantially vertical position.

5. A trailer as claimed in any one of the preceding claims, in which the wheeled chassis (100) includes a pair of wheel and trailing arm suspension units (102) and a cross member (103) on which the tilting bed (104) is mounted.
